**Europäisches Patentamt**

**European Patent Office**

**Office européen des brevets**

(19)

(11) Veröffentlichungsnummer: **0 138 108 B1**

## EUROPÄISCHE PATENTSCHRIFT

(12)

(45) Veröffentlichungstag der Patentschrift:
**31.01.90**

(21) Anmeldenummer: **84111393.9**

(22) Anmeldetag: **25.09.84**

(51) Int. Cl.⁴: **H 04 M 3/40,** H 04 M 3/54, H 04 M 3/22

(54) **Verfahren zur Erkennung eines in einer vorgegebenen Sprechrichtung auftretenden Mindestsprachpegels an einer in einer Fernmeldeleitung angeordneten bidirektionalen Verstärkerschaltung sowie Einrichtung zur Durchführung des Verfahrens.**

(30) Priorität: **15.10.83 DE 3337587**

(43) Veröffentlichungstag der Anmeldung:
**24.04.85 Patentblatt 85/17**

(45) Bekanntmachung des Hinweises auf die Patenterteilung:
**31.01.90 Patentblatt 90/5**

(84) Benannte Vertragsstaaten:
**AT BE CH DE GB LI NL SE**

(56) Entgegenhaltungen:
**US-A- 4 027 109**

(73) Patentinhaber: **Neumann Elektronik GmbH,
Bülowstrasse 104 - 110, D-4330 Mülheim 1 (DE)**

(72) Erfinder: **Neumann, Dirk, Dipl.-Ing., Schemelsbruch 11,
D-4330 Mülheim-Ruhr 1 (DE)**

(74) Vertreter: **Feder, Heinz, Dr. et al, Dominikanerstrasse 37,
D-4000 Düsseldorf 11 (DE)**

**Beschreibung**

Die Erfindung betrifft ein Verfahren zur Erkennung einer in einer vorgegebenen Sprechrichtung auftretenden Mindestsprachpegels an einer in einer Fernmeldeleitung angeordneten bidirektionalen Verstärkerschaltung, bei der für die beiden Sprechrichtungen getrennte, in einer Gabelverstärkerschaltung angeordnete Verstärker vorgesehen sind.

Es ist bekannt, bei Fernsprechanlagen mittels einer sogenannten «Anruf-Weiterschaltung» Anrufe, die einem bestimmten Anschluß gelten, zu einem anderen Anschluß weiterzuschalten. Dieser andere Anschluß kann unter Umständen weit entfernt vom ersten Anschluß liegen, so daß die Weiterschaltung über Fernverbindungsleitungen erfolgt, in welche in den Vermittlungsstellen bidirektionale Verstärkerschaltungen eingeschaltet sind.

Es hat sich herausgestellt, daß es bei derartigen Schaltungen oft außerordentlich schwierig ist, in der Vermittlungsstelle festzustellen, ob ein Gespräch beendet ist bzw. ob der anrufende Teilnehmer den Telefonhörer auf die Gabel gelegt hat.

Dies kann zur Folge haben, daß auch nach Gesprächsende die Gebührenzähler weiterlaufen und somit Gebühreneinheiten berechnet werden für Zeiten, in denen kein Gespräch stattfand.

Es ist weiterhin bekannt (siehe z.B. US-A-4 027 109), in der Vermittlungsstelle eine Überprüfung der Fernsprechleitung auf «Gesprächsbeendigung» durchzuführen, indem die Leitung in gewissen Zeitabständen kurzzeitig (ca. 100 ms) unterbrochen wird und bestimmte, bei der Unterbrechung auftretende Spannungswerte gemessen werden. Dieses Unterbrechen der Leitung ist aber, wenn das Gespräch noch nicht beendet ist, für die Teilnehmer mit außerordentlich unangenehmen Störgeräuschen verbunden.

Die der Erfindung zugrunde liegende Aufgabe bestand darin, ein Verfahren zu schaffen, mit dem in einer Schaltung der oben und im Oberbegriff des Patentanspruches 1 angegebenen Art die Beendigung eines Gespräches sicher festgestellt werden kann, ohne daß für die Teilnehmer unangenehme Störgeräusche auftreten. Insbesondere sollte es möglich sein, festzustellen, ob ein bestimmter Teilnehmer, also beispielsweise der Anrufer, das Gespräch beendet hat.

Die Erfindung geht davon aus, daß grundsätzlich in der verwendeten Gabelverstärkerschaltung eine solche Feststellung möglich wäre, wenn eine ideale Ausbildung der Gabelschaltung praktisch verwirklichbar wäre. Da dies nicht der Fall ist, führt eine bloße Messung eines Sprachpegels in einem Zweig der Gabelschaltung nicht zum Ziel, da je nach den Anpassungs- und Dämpfungsverhältnissen an der Gabelschaltung es nicht möglich ist, exakt festzustellen, ob ein Teilnehmer noch spricht oder nicht.

Die Lösung der oben angegebenen Aufgabe erfolgt daher erfindungsgemäß mit den Merkmalen aus dem kennzeichnenden Teil des Patentanspruches 1.

Eine besonders vorteilhafte Ausführungsform des erfindungsgemäßen Verfahrens ist Gegenstand von Patentanspruch 2.

Die Unterbrechungen des Signalflusses in dem einen Zweig der Gabelverstärkerschaltung können sehr kurzzeitig erfolgen, und ihre Dauer beträgt beispielsweise nur 10 ms, so daß sie von den Teilnehmern nicht als Störgeräusch bemerkt werden. Die Frequenz, mit der diese Unterbrechungen erfolgen, kann so gewählt werden, daß jeweils im Abstand einiger Sekunden, beispielsweise 6 Sek., eine solche Unterbrechung erfolgt. Wie weiter unten anhand eines Ausführungsbeispieles genauer erläutert, erfolgt bei der besonders vorteilhaften, in Patentanspruch 2 beschriebenen Ausführungsform des erfindungsgemäßen Verfahrens die Überprüfung der Fernmeldeleitung in zwei Stufen, indem zunächst die Unterbrechung in größeren Zeitabständen durchgeführt wird und erst dann, wenn durch Unterschreitung des vorgegebenen Mindestwertes der Eindruck entsteht, das Gespräch könnte beendet sein, wird in kürzeren Zeitabständen unterbrochen. Auf diese Weise kann relativ rasch festgestellt werden, ob es sich nur um eine Gesprächspause handelte, oder ob der Teilnehmer tatsächlich den Telefonhörer auf die Gabel gelegt hat. Das bei Unterschreitung des Mindestwertes des gemessenen Sprachpegels abgegebene Steuersignal kann dann in der Vermittlungsstelle weiterverarbeitet werden, indem gegebenenfalls durch die oben erwähnte längere Unterbrechung und Messung die tatsächliche Beendigung des Gespräches festgestellt werden kann.

Gegenstand der Erfindung ist weiterhin eine Einrichtung zur Durchführung des erfindungsgemäßen Verfahrens mit den Merkmalen aus Patentanspruch 3. Vorteilhafte Ausführungsformen der Einrichtung sind in den Unteransprüchen 4 bis 7 beschrieben.

Es hat sich herausgestellt, daß mit der erfindungsgemäßen Einrichtung bei geringem technischem Aufwand eine sichere, rasche und störungsfreie Erkennung des in einer vorgegebenen Sprechrichtung auftretenden Mindestsprachpegels und damit der Tatsache, ob das Gespräch beendet ist oder nicht, möglich ist.

Die erfindungsgemäße Einrichtung kann über einen Mikroprozessor gesteuert sein, der gegebenenfalls noch andere Aufgaben zur Steuerung der bidirektionalen Verstärkerschaltung bzw. der Anruf-Weiterschaltung übernehmen kann.

Im folgenden wird anhand der beigefügten Zeichnungen ein Ausführungsbeispiel für das erfindungsgemäße Verfahren und eine hierfür geeignete Einrichtung näher erläutert.

In den Zeichnungen zeigen:

Fig. 1 in einem Prinzipschaltbild eine Einrichtung zur Durchführung des erfindungsgemäßen Verfahrens;

Fig. 2 in einem Signal/Zeit-Diagramm die an einigen Punkten der Schaltung nach Fig. 1 auftretenden Signale;

Fig. 3 das erfindungsgemäße Verfahren in einer Darstellung als Flußdiagramm;

Fig. 4 eine Detaildarstellung einer spezielleren Schaltung zur Durchführung des erfindungsgemäßen Verfahrens an einer Einrichtung nach Fig. 1.

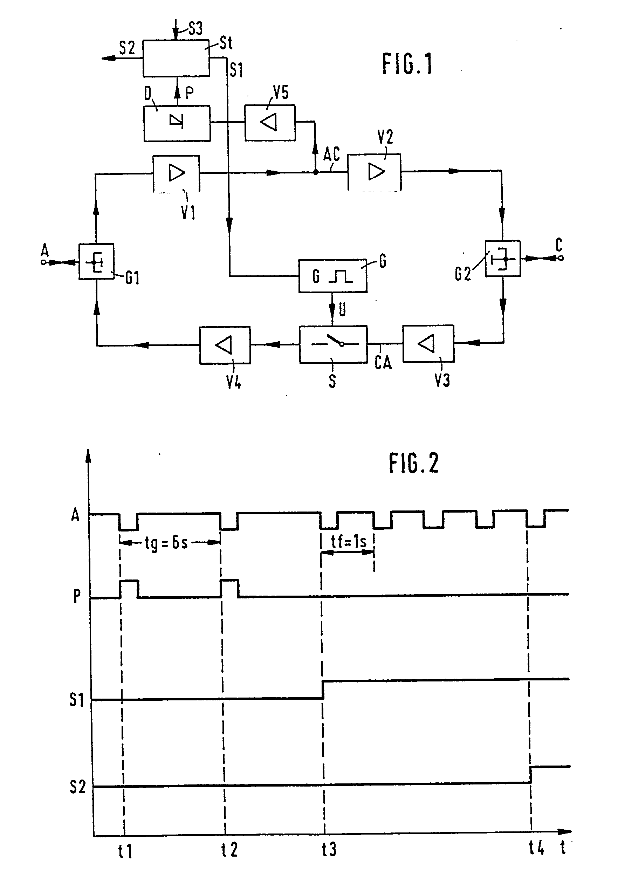

Die Einrichtung nach Fig. 1 besteht aus einer Gabelverstärkerschaltung mit den Gabelschaltungen G1 und G2 und dem von einem Teilnehmer A zum Teilnehmer C führenden Zweig AC und einem vom Teilnehmer C zum Teilnehmer A führenden Zweig CA. Im Zweig AC befindet sich ein Verstärker, der durch die Verstärkerstufen V1 und V2 symbolisiert ist, während sich im Zweig CA Verstärkerstufen V3 und V4 befinden. Selbstverständlich können hier in an sich bekannter Weise noch weitere Verstärkerstufen eingeschaltet sein. Die Schaltung kann auch so ausgebildet sein, daß die eigentliche Verstärkung in den Verstärkerstufen V2 und V4 stattfindet, während die Stufen V1 und V3 lediglich zur Entkopplung dienen.

Die in Fig. 1 dargestellte Schaltung ist so ausgelegt, daß durch sie festgestellt werden kann, ob der Teilnehmer A das Gespräch beendet bzw. den Hörer aufgelegt hat. Hierzu soll die Schaltung feststellen, ob in der Richtung vom Teilnehmer A zum Teilnehmer C, also im Zweig AC der Gabelverstärkerschaltung, ein bestimmter Mindestsprachpegel unterschritten wird. So soll beispielsweise festgestellt werden, ob in Richtung von A nach C ein Pegel vorliegt, der kleiner ist als − 63 dBm (0,5 mV), wobei von C nach A gleichzeitig ein Pegel von − 17 dBm (100 mV) gesendet werden kann.

Zu diesem Zweck wird der Zweig CA in regelmäßigen Abständen, beispielsweise alle 6 Sek., für ca. 10 ms unterbrochen, indem einer ansteuerbaren Schaltvorrichtung S von einem Signalgenerator G aus ein entsprechendes Steuersignal U zugeführt wird. Die Unterbrechungszeiten von nur 10 ms sind im Sprachbereich kaum wahrnehmbar, so daß der Teilnehmer A durch sie nicht gestört wird. Während der Unterbrechungszeit des Zweiges CA wird im Zweig AC der von A nach C gesendete Sprachpegel gemessen. Hierzu wird das Signal vor der Verstärkerstufe V2 abgenommen und über einen Verstärker V5 einem Demodulator D zugeführt, an dessen Ausgang festgestellt wird, ob in Richtung von A nach C ein Pegel P von mindestens − 63 Db vorliegt oder nicht. Der erhaltene Wert von P wird einer Steuervorrichtung St zugeführt, die Teil einer größeren Steuervorrichtung sein kann, die in der Vermittlungsstelle angeordnet ist und zusätzlich andere Steueraufgaben haben kann.

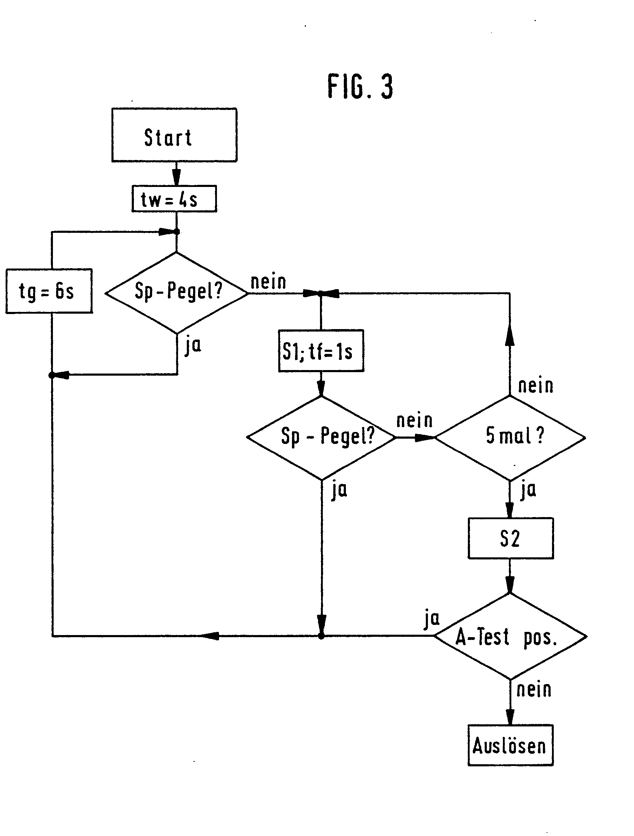

Das durchgeführte Prüfverfahren wird nunmehr anhand der Fig. 2 und 3 näher erläutert. Nach dem «Start» des Verfahrens bei Gesprächsbeginn, wird zunächst eine Wartezeit tw von beispielsweise 4 Sek. eingeführt. Dann wird das Unterbrechungssignal U erzeugt. Die Darstellung der Signale in Fig. 2 ist nur grob qualitativ, und insbesondere sind die Impulsbreiten gegenüber der Zeit zwischen den Impulsen stark übertrieben dargestellt. Es wird zunächst jeweils nach Beginn einer durch das Signal U erzeugten Unterbrechung im Zweig CA einige ms lang gewartet und dann innerhalb von ca. 2 bis 3 ms festgestellt, ob im Zweig AC der geforderte Sprachpegel vorhanden ist und das Signal P auftritt. Lautet die Entscheidung «Ja», werden keinerlei Steuersignale abgegeben, und das Unterbrechungssignal U wird nach der Zeit tg = 6 Sek. erneut abgegeben und festgestellt, ob das Signal P vorhanden ist. In Fig. 2 ist diese Überprüfung zu den Zeitpunkten t1, t2 und t3 dargestellt. Wenn im Zeitpunkt t3 festgestellt wird, daß der geforderte Sprachpegel im Zweig AC nicht mehr vorhanden ist, also das Signal P nicht vorliegt, und die Entscheidung «Nein» lautet, wird die Frequenz des Unterbrechungssignales U geändert, und die Unterbrechungen erfolgen nunmehr im Abstand eines Zeitraumes tf = 1 Sek. Dies kann dadurch bewirkt werden, daß von der Steuervorrichtung St ein Steuersignal S1 dem Generator G zugeführt wird und in an sich bekannter Weise die Umstellung der Unterbrechungsfrequenz bewirkt wird. Es wird nunmehr jeweils im Abstand von 1 Sek. wiederum gemessen, ob im Zweig AC der geforderte Sprachpegel auftritt und ein Signal P vorhanden ist. Wenn nach einer vorgegebenen Anzahl dieser in kürzeren Abständen erfolgenden Überprüfung, beispielsweise nach fünfmaligem Durchlaufen dieses zweiten Prüfzyklus, die Entscheidung immer noch «Nein» lautet, wird davon ausgegangen, daß der Teilnehmer A den Telefonhörer auf die Gabel gelegt hat und das Gespräch beendet ist. Es wird nunmehr zum Zeitpunkt t4 ein Steuersignal S2 erzeugt, und dieses Steuersignal wird weitergeleitet. Es kann beispielsweise in der Vermittlungsstelle weiterverarbeitet werden, indem nunmehr der sogenannte «A-Test» mit einer längeren Leitungsunterbrechung durchgeführt wird. Verläuft auch dieser Test negativ, so daß die Entscheidung «Nein» lautet, kann endgültig von der Beendigung des Gesprächs ausgegangen werden und die Freischaltung der Leitung ausgelöst werden. Führt der A-Test zu dem Ergebnis, daß das Gespräch noch nicht beendet ist, so wird der Prüfzyklus über den Eingang S3 der Steuervorrichtung St erneut gestartet.

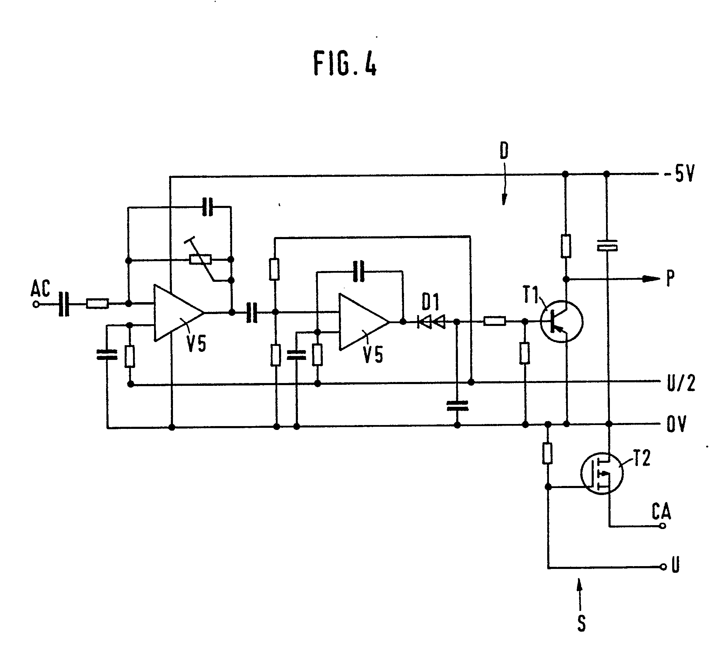

In Fig. 4 ist eine besonders einfache Schaltung dargestellt zur Erzeugung der Unterbrechungen des Signalflusses im Zweig CA der Gabelverstärkerschaltung und zur Überprüfung, ob im Zweig AC das oben erwähnte Signal P vorhanden ist. Die in Fig. 4 dargestellte Schaltung setzt sich aus an sich bekannten Schaltungsteilen zusammen. Der Eingang des Verstärkers V5 ist am Punkt AC an den Zweig AC angeschlossen.

Die Vorrichtung zur Unterbrechung des Signalflusses im Zweig CA ist durch einen Transistor T2 verwirklicht, der als Feldeffekttransistor ausgebildet sein kann, und dessen Steuerelektrode das Unterbrechungssignal U vom nichtdargestellten Generator G aus zugeführt wird. Über den Transistor T2 wird der Zweig CA während der Unterbrechungszeit mit dem Punkt «OV» verbunden, also kurzgeschlossen und damit ausgeschaltet. Das Signal P des Demodulators D wird am Kollektor eines Transistors T1 abgenommen, dessen Basis das vom Verstärker V5 über die Diode D1 geführte Signal zugeführt wird.

Ist die ganze Einrichtung in nicht eigens dargestellter Weise mikroprozessorgesteuert, so wird in an sich bekannter Weise das Vorhandesein des Signals P zyklisch abgefragt, und es werden mikroprozessorgesteuert die notwendigen Steuersignale in an sich bekannter Weise erzeugt. Die Steuervorrichtung St kann dabei den Mikroprozessor enthalten und erzeugt sämtliche die Prüfzyklen steuernden Signale.

**Patentansprüche**

1. Verfahren zur Erkennung eines in einer vorgegebenen Sprechrichtung auftretenden Mindestsprachpegels an einer in einer Fernmeldeleitung angeordneten bidirektionalen Verstärkerschaltung, bei der für die beiden Sprechrichtungen getrennte, in einer Gabelverstärkerschaltung angeordnete Verstärker vorgesehen sind, dadurch gekennzeichnet, daß in dem einen Zweig (CA) der Gabelverstärkerschaltung der Signalfluß für einen vorgegebenen Zeitraum unterbrochen wird, und während dieses Zeitraumes der Sprachpegel im anderen Zweig (AC) der Gabelverstärkerschaltung gemessen, mit einem vorgegebenen Mindestwert verglichen und ein Steuersignal erzeugt wird, wenn der Mindestwert unterschritten wird.

2. Verfahren nach Anspruch 1, dadurch gekennzeichnet, daß die Unterbrechung des Signalflusses in dem einen Zweig (CA) der Gabelverstärkerschaltung periodisch mit vorgegebener Frequenz erfolgt, und sobald bei einer der Vergleichsmessungen der Mindestwert des Sprachpegels im anderen Zweig (AC) der Gabelverstärkerschaltung unterschritten wird, die Unterbrechungsfrequenz für einen vorgegebenen Zeitraum auf einen vorgegebenen Wert erhöht wird, wobei wiederum während jedes Unterbrechungszeitraumes der Sprachpegel (P) im anderen Zweig (AC) der Gabelverstärkerschaltung gemessen und mit dem Mindestwert verglichen wird, wobei ein weiteres Steuersignal (S2) erzeugt wird, wenn während einer vorgegebenen Zahl von Unterbrechungen der Mindestwert unterschritten wird.

3. Einrichtung zur Durchführung des Verfahrens nach Anspruch 1, gekennzeichnet durch eine im einen Zweig (CA) der Gabelverstärkerschaltung angeordnete, ansteuerbare Vorrichtung (S) zur Unterbrechung des Signalflusses und eine an den anderen Zweig (AC) der Gabelverstärkerschaltung angeschlossene Vorrichtung (D-St) zur Messung des Sprachpegels, zum Vergleich des gemessenen Wertes mit einem Mindestwert und zur Erzeugung von Steuersignalen (S1, S2) bei Unterschreitung des Mindestwertes.

4. Einrichtung nach Anspruch 3 zur Durchführung des Verfahrens nach Anspruch 2, dadurch gekennzeichnet, daß die Vorrichtung (D-St) zur Messung des Sprachpegels (P) einerseits mit der Vorrichtung (S) zur Unterbrechung des Signalflusses und andererseits mit einer Vermittlungszentrale verbunden ist, und das erste bei Unterschreitung des Mindestwertes des Sprachpegels (P) erzeugte Steuersignal (S1) zur Änderung der Unterbrechungsfrequenz der Vorrichtung (S) zur Unterbrechung des Signalflusses zugeführt wird, während das weitere Steuersignal (S2) der Vermittlungszentrale zugeführt wird.

5. Einrichtung nach Anspruch 3 oder 4, dadurch gekennzeichnet, daß der Vorrichtung (D-St) zur Messung des Sprachpegels (P) ein Verstärker (V5) vorgeschaltet ist.

6. Einrichtung nach einem der Ansprüche 3 bis 5, dadurch gekennzeichnet, daß die Vorrichtung (S) zur Unterbrechung des Signalflusses ein diesen Zweig (CA) der Gabelverstärkerschaltung kurzschließendes, ansteuerbares Schaltelement (T2) enthält.

7. Einrichtung nach einem der Ansprüche 3 bis 6, dadurch gekennzeichnet, daß sie einen Mikroprozessor enthält, durch den der Ausgang der Vorrichtung (D-St) zur Messung des Sprachpegels (P) in einem vorgegebenen Takt auf das Vorhandensein eines Steuersignals (S2) abgefragt wird.

**Claims**

1. Method of detecting a minimum speech level occurring in a given speech direction at a bidirectional amplifier circuit arranged in a telecommunication line, in which separate amplifiers arranged in a hybrid amplifier circuit are provided for the two speech directions, characterized in that the signal flow is interrupted for a given period of time in the one branch (CA) of the hybrid amplifier circuit, and during this period of time the speech level is measured in the other branch (AC) of the hybrid amplifier circuit, compared with a given minimum value and a control signal is produced if the minimum value is undershot.

2. Method according to Claim 1, characterized in that the interruption of the signal flow in the one branch (CA) of the hybrid amplifier circuit is performed periodically at a given frequency and, as soon as the minimum value of the voice level in the other branch (AC) of the hybrid amplifier circuit is undershot in one of the comparison measurements, the interruption frequency is increased for a given period of time to a given value, the speech level (P) in the other branch (AC) of the hybrid amplifier circuit again being measured during each interruption period and compared with the minimum value, a further control signal (S2) being generated if the minimum value is undershot during a given number of interruptions.

3. Device for performing the method according to Claim 1, characterized by a triggerable mechanism (S), arranged in the one branch (CA) of the hybrid amplifier circuit, for interruption of the signal flow and a mechanism (D-St), connected to the other branch (AC) of the hybrid amplifier circuit, for measurement of the speech level, for comparison of the measured value with a minimum value and for generation of control signals (S1, S2) upon undershooting of the minimum value.

4. Device according to Claim 3 for performing the method according to Claim 2, characterized in that the mechanism (D-St) for measurement of the speech level (P) is connected on the one hand to the mechanism (S) for interruption of the signal flow and on the other hand to a main exchange, and the first control signal (S1) generated upon undershooting of the minimum value of the speech level (P) is fed to the mechanism (S) for interruption of the signal flow, for changing the interruption frequency, while the other control signal (S2) is fed to the main exchange.

5. Device according to Claim 3 or 4, characterized in that an amplifier (V5) is connected upstream of the mechanism (D-St) for measurement of the speech level (P).

6. Device according to one of Claims 3 to 5, characterized in that the mechanism (S) for interruption of the signal flow contains a triggerable switching element (T2), short-circuiting this branch (CA) of the hybrid amplifier circuit.

7. Device according to one of Claims 3 to 6, characterized in that it contains a microprocessor, by which the output of the mechanism (D-St) for measurement of the speech level (P) is interrogated in a given cycle for the presence of a control signal (S2).

**Revendications**

1. Méthode pour détecter un niveau de parole minimal dans une certaine direction de communication à un circuit amplificateur connecté dans une ligne de télécommunication directionnelle, dans laquelle sont prévus des amplificateurs séparés dans les deux directions de parole et disposés dans un circuit d'amplificateur à fourche, caractérisée en ce que le passage des signaux est interrompu pendant une durée prédéterminée dans une branche (CA) du circuit d'amplificateur à fourche et que, pendant cette interruption, le niveau de parole est mesuré dans l'autre branche (AC) du circuit d'amplificateurs à fourche et est comparé à une valeur minimale prédéterminée, et qu'un signal de commande est créé si l'on est descendu en dessous de la valeur minimale.

2. Méthode selon la revendication 1, caractérisée en ce que l'interruption du passage des signaux dans l'une des branches (CA) du circuit d'amplificateur à fourche a lieu périodiquement à une fréquence prédéterminée et que, dès que les mesures de comparaison ont pu déterminer que l'on est descendu en dessous de la valeur minimale du niveau de parole dans l'autre branche (AC) du circuit d'amplificateur à fourche, la fréquence d'interruption est augmentée jusqu'à une valeur prédéterminée pendant une période prédéterminée, tandis que le niveau de parole (P) est à nouveau mesuré dans l'autre branche (AC) du circuit d'amplificateur à fourche pendant la durée d'interruption et est comparé à la valeur minimale, tandis qu'un autre signal de commande (S2) est créé si l'on est descendu en dessous de la valeur minimale pendant un nombre prédéterminé d'interruptions.

3. Dispositif pour mettre en œuvre la méthode selon la revendication 1, caractérisé par un dispositif (S) pouvant être commandé et disposé dans une branche (CA) du circuit d'amplificateur à fourche afin d'interrompre le passage des signaux, et un dispositif (D-St) raccordé dans l'autre branche (AC) du circuit d'amplificateur à fourche pour mesurer le niveau de parole, afin de comparer la mesure mesurée à une valeur minimale et de créer des signaux de commande (S1, S2) si l'on est descendu en dessous de la valeur minimale.

4. Dispositif selon la revendication 3 pour mettre en œuvre la méthode de la revendication 2, caractérisé en ce que le dispositif (D-St) destiné à mesurer le niveau de parole (P) est connecté, d'une part, au dispositif (S) pour interrompre le passage des signaux et, d'autre part, à une centrale de transmission et que le premier signal de commande (S1) créé lorsqu'on est descendu en dessous de la valeur minimale de niveau de parole (P) pour modifier la fréquence d'interruption est envoyé au dispositif (S) pour interrompre le passage des signaux, tandis que l'autre signal de commande (S2) est envoyé à la centrale de transmission.

5. Dispositif selon la revendication 3 ou 4, caractérisé en ce que le dispositif (D-St) pour mesurer le niveau de parole (P) est monté avant un amplificateur (V5).

6. Dispositif selon l'une des revendications 3 à 5, caractérisé en ce que le dispositif (S) pour interrompre le passage des signaux contient un élément de commutation (T2) pouvant être commandé et pouvant mettre en court-circuit cette branche (CA) du circuit d'amplificateur à fourche.

7. Dispositif selon l'une des revendications 3 à 6, caractérisé en ce qu'il contient un microprocesseur utilisé pour demander à la sortie du dispositif (D-St) de mesurer le niveau de parole (P) suivant une cadence prédéterminée, afin de s'assurer de l'existence d'un signal de commande (S2).

FIG.1

FIG.2

# FIG. 3

# FIG. 4